# EUROPEAN PATENT SPECIFICATION

(11) **EP 3 390 335 B1**
(45) Date of publication and mention of the grant of the patent: **17.12.2025**
(21) Application number: 16876185.6
(22) Date of filing: 10.06.2016
(51) Int. Cl.: C07C 37/14, C08G 8/22, C08G 12/44, C08K 5/105, C08L 1/14, C08K 5/13, C08L 61/06, B22C 1/22

(54) **COMPOSITIONS AND METHODS FOR MODIFIED ESTER-CURATIVES AND REDUCTION OF FORMALDEHYDE EMISSION AND ODOR PHENOLIC BINDER SYSTEMS**
ZUSAMMENSETZUNGEN UND VERFAHREN FÜR MODIFIZIERTE ESTER-KURATIVA UND VERRINGERUNG DER FORMALDEHYDEMISSION UND GERUCHSPHENOLHARZBINDERSYSTEME
COMPOSITIONS ET PROCÉDÉS DE RÉDUCTION POUR AGENTS DE DURCISSEMENT DE TYPE ESTER MODIFIÉS ET RÉDUCTION DE SYSTÈMES DE LIANT PHÉNOLIQUE D'ÉMISSION ET D'ODEURS DE FORMALDÉHYDE

(30) Priority: 18.12.2015 US 201514975471
(43) Date of publication of application: 24.10.2018
(73) Proprietor: HA-International, LLC, Westmont, IL 60559 (US)
(72) Inventor: TRIKHA, Sudhir, K., Naperville IL 60564 (US)
(74) Representative: Forresters IP LLP
(86) International application number: PCT/US2016/037033
(87) International publication number: WO 2017/105543

(56) References cited:
- WO-A1-00/50186
- GB-A- 2 140 017
- JP-A- 2007 231 218
- JP-A- H1 133 670
- US-A- 5 354 788
- US-A1- 2005 250 872
- US-A1- 2006 094 853
- US-A1- 2010 252 226
- US-A1- 2012 043 694

## Description

### FIELD OF THE INVENTION

This invention relates to no-bake cores and molds used in the foundry industry. More specifically, this invention relates to methods for reduction of formaldehyde odor and emission during the production of cores and molds comprising ester curable phenolic binders.

### BACKGROUND OF THE INVENTION

In foundry art, cores and molds for making metal castings are normally prepared from a mixture of an aggregate material, such as sand, and a binding amount of a binder or binder system. Typically, after the aggregate material and binder have been mixed, the resulting mixture is rammed, blown, or otherwise formed to the desired shape or pattern of the core or mold, and then cured to a solid using a catalyst, a co-reactant, and/or heat.

One group of processes which do not require heating in order to achieve curing of the cores and molds are referred to as no-bake processes. In such processes, the binder components are coated on an aggregate material during a mixing step, and then formed around the cope and drag halves of a mold. The binder components cure after a finite period of time, thus hardening the aggregate mixture in preparation for pouring of metals during casting. The elimination of the heating step has, historically, resulted in a reduction of costs in no-bake processes as compared to earlier technologies.

Several types of no-bake binders are known. Furan no-bake (FNB) binders were introduced as early as the 1950s. Furan binders are generally regarded as the first genuine no-bake binders, and they are generally easy to control and have excellent strength. However, FNBs must contend with significant raw material price swings, production limitations, and the disagreeable smell of sulfur dioxide emissions during the casting process. Phenolic-urethane no-bake (PUNB) binders have been around since the 1970s, and these binders enhanced the ease of mold (aggregate) reclamation and use of no-bake binder systems in high speed production of metal castings. However, a primary drawback of PUNBs is the comparatively high levels of odor and smoke at molding and casting due to the presence of solvents comprising volatile organic compounds. Organic ester-cured alkaline phenolic no-bake binders, meanwhile, were introduced in the early 1980s. These binder systems employ water soluble resins that have comparatively lower levels of odor emission and toxicity during molding and casting, resulting in better working conditions and increased foundry productivity.

Commonly used resins in ester-cured alkaline phenolic no-bake binder systems include phenol-formaldehyde polymer. As a result, despite the comparatively lower odor production of these systems, free formaldehyde is emitted during the molding and core making processes that use this system. As a gas, formaldehyde has a pungent, offensive odor. The Occupational Safety & Health Administration (OSHA) has established permissible exposure limits for the substance. Additionally, formaldehyde can cause irritation and burning of the eyes and nose of people exposed to it, such foundry workers. Thus, adequate control or elimination of formaldehyde emission during the use of ester-cured alkaline phenolic no-bake binder systems is desirable.

United States Patent Publication Number 2005/0250872 to Fox et al. teaches a process comprising adding a mixture of an aqueous alkaline phenolic resole resin and a liquid organic ester for the purpose of immobilizing large swaths of an aggregate, such as sand in a desert. Fox et al. further discloses that urea may be added to the resin as a scavenger that reacts with unreacted formaldehyde to allegedly remove odor caused by the same.

United States Patent Number 6,559,203 to Hutchings et al., teaches a combination of furan binders and resorcinol in foundry molds. Hutchings et al. further teaches a combination of ester cured phenolic resole resin binders and resorcinol to demonstrate general improvement in long-term tensile strengths and humidity resistance of foundry cores made with the aforementioned binders
JP 2007 231218 A discloses a hardener composition for alkaline phenolic resins containing lactone and aliphatic ester.
JP H11 33670 A discloses a hardening or curing agent composition of the organic ester type for hardening an alkaline water-soluble phenolic resin in a molding method with sand.

It is notable that urea has been used in the prior art to reduce formaldehyde emissions. However, it can only be added in limited amounts, as it is a source of nitrogen so the level needs to be controlled in steel castings to avoid nitrogen related defects. Accordingly, the amounts of urea currently used are not adequate to effectively reduce formaldehyde.

The prior art fails to address the longstanding unmet need in the foundry industry for ester-cured alkaline phenolic no-bake binder systems that will not only help foundries comply with OSHA standards for worker safety and health, but also improve the working environment around the systems by reducing the offensive odors and toxicity associated with intolerable formaldehyde emission levels.

Accordingly, it would be advantageous to provide an ester-cured alkaline phenolic no-bake composition that reduces formaldehyde odor and emissions as compared to conventional ester-cured alkaline phenolic no-bake technologies, without sacrificing performance (i.e., tensile strength) in the associated molds and cores or imparting nitrogen related defects in steel castings, as described herein.

### SUMMARY OF THE INVENTION

Unexpectedly, in view of the foregoing challenges, it has been found that ester-cured alkaline phenolic no-bake binder systems having liquid ester components that are modified with concentrations of resorcinol exhibit improved reduction of formaldehyde emissions without sacrificing performance in foundry molds and cores that employ this technology. Reductions in formaldehyde are achieved due to the modification of the liquid ester with resorcinol, which functions as a scavenger by reacting with formaldehyde during curing of the molds and cores.
aspect

A method for reducing formaldehyde emissions from ester-cured foundry binders used in the formation of foundry molds and cores, according to claim 1 and the preferred aspects are set out in the dependent claims.

An objective of the present invention is to provide a new and improved ester-cured alkaline phenolic no-bake binder composition that reduces formaldehyde emission during the curing process of foundry molds and cores, without sacrificing performance of the same.

A major advantage of the present invention is that it provides molds and cores having significantly lower emissions of formaldehyde during the curing process than was heretofore obtainable with conventional ester-cured alkaline phenolic no-bake binder compositions and methods.

Another major advantage of the present invention is that it provides molds and cores having the combined benefit of significantly lower emissions of formaldehyde during the curing process coupled with commercially suitable tensile strength in the molds and cores than was heretofore obtainable with conventional ester-cured alkaline phenolic no-bake binder compositions and methods.

### BRIEF DESCRIPTION OF THE DRAWINGS

Not applicable.

### DETAILED DESCRIPTION OF THE ASPECTS

While the invention may be susceptible to aspects in different forms, there is described herein in detail, specific preferred aspects with the understanding that the present disclosure is to be considered an exemplification of the principles of the invention, and is not intended to limit the invention to that described herein.

In one preferred aspect of the present invention, a composition is formed of a binder, an aggregate, an ester-curative, and resorcinol.

One preferred binder of the present invention is ALpHASET 9040 alkaline phenolic resole resin, made and sold by HA International LLC, Westmont, IL. This resin is comprised of 5% by weight to 10 % by weight sodium hydroxide, 1% by weight to 3% by weight of urea, and less than 0.3% by weight, formaldehyde. It has a viscosity of 100 cPs, a solids content of 47%, a specific gravity of 1.23, a pH of 13.0, a free phenol content of 0.5%, a free formaldehyde content of 0.25%, and a nitrogen content of less than 1%. It is ester-curable, preferably using a liquid ester. ALpHASET 9040 derives its alkalinity predominantly from sodium hydroxide and thus it may be described as a sodium-based resin. It is contemplated, however, that other aspects may include other alkaline phenolic resole resins, such as a potassium based alkaline resin or a hybrid of sodium and potassium alkaline resins, as will be appreciated by those ordinary skill in the art.

One preferred aggregate of the present invention is clean, round grain, 55 grain fineness number (GFN) silica sand. The aggregate materials commonly used in the foundry industry include silica sand, construction aggregate, quartz, chromite sand, zircon sand, olivine sand, or the like. Reclaimed sand, that is sand that may have been previously bonded with an ester cured alkaline phenolic resin binder, or other binder system, may also be used. Sand sold under the product designation F-5574, available from Badger Mining Corporation, Berlin, WI, is useful in making cores and molds and in testing the aspects of the present invention. Likewise, sand sold under the product designation Wedron 530, available from Wedron Silica, a division of Fairmount Minerals, Wedron, IL, is also useful. Sand sold under the product designation Nugent 480, available from Nugent Sand Company, Muskegon, MI, may also be used. Where alkaline resoles are used in the methods of the present invention, the sand type will affect the strength development of the bound aggregate.

A preferred ester-curative, also referred to as a co-reactant, of the present invention accelerates the hardening of the resole resin and may be introduced to the resole resin as a liquid. It is contemplated that the esters used in preparing the ester-curative compositions of this invention may be any of the esters commonly used to cure alkaline phenolic resole resins. Such esters include gamma-butyrolactone, triacetin, ethylene glycol diacetate, propyleneglycol diacetate, propylene carbonate, dimethyl succinate, dimethyl adipate, dimethyl glutarate, glycerol mono-and diacetates and the like. Mixtures of these ester-curatives may also be used. It is further contemplated that other esters, such as those described in U.S. Pat. Nos. 4,988,745 and 5,036,116 may be used as well.

One preferred ester-curative of the present invention is ALpHACURE 920, made and sold by HA International LLC, Westmont, IL. This ester-curative is comprised of 90% by weight to 100% by weight of glycerol triacetate, which is also known as triacetin. This ester-curative has a relative density of 1.154 g/cm³, a solubility in water of 6.1%, and it has a specific gravity of 1.1. Further, this ester-curative contains no dibasic ester (DBE). It is contemplated, however, that other aspects may include other ester-curatives, as will be appreciated by those ordinary skill in the art.

Resorcinol is comprised of 99.7% by weight of resorcinol, 0.2% by weight of moisture, and 0.1% by weight of phenol. Resorcinol itself is a benzenediol having a molecular weight of 110.1 g/mol and a relative density of 1.28 g/cm³. In preferred aspects of the present invention, it has been found that a modification with resorcinol of the ester-curative component of the ester-cured alkaline phenolic no-bake binder systems described herein results in an unexpected and desirable reduction in formaldehyde emission and odor from the molds and cores, without sacrificing tensile strength of the same.

A stoichiometric amount of ester is essential to co-react with the resin. The use of high and low levels of ester can lead to casting defects. While the level of resorcinol in the ester results in formaldehyde reduction, too much will detract from the curing speed of the molds and core, and/or require higher ester levels to maintain stoichiometry. 1 to 5% by weight of resorcinol in the modified ester is the preferred amount. Additionally, preferred aspects of the present invention which include pure resorcinol, as opposed to resorcinol pitch, are advantageous because pure resorcinol is more potent than resorcinol pitch with respect to reactivity with unreacted formaldehyde. Therefore, less resorcinol by weight may be used in the preferred aspects of the present invention as compared to greater amounts of resorcinol pitch that would otherwise be required to achieve the formaldehyde emission reductions and strip times provided by the systems and methods of the present invention. Moreover, whereas the odor of pure resorcinol is faint, the odor of resorcinol pitch is strong, such that the use of resorcinol pitch would be inapposite to one of the underlying purposes of the present invention which is to reduce the exposure of individuals to offensive odors during the manufacture of foundry binder systems.

### METHODOLOGY

Generally, when an admixture is to be cured according to a no-bake process, the ester-curative is added in liquid form to the aggregate material with the phenolic resole resin component. The admixture is then shaped and simply permitted to cure until reaction between the components is substantially complete, thus forming a shaped product such as a foundry core or mold. It is contemplated, however, that other admixing methods may be used, as will be appreciated by those ordinary skill in the art. Moreover, it is contemplated that admixtures of the present invention may be allowed to cure in any housing suitable for use with ester-cured phenolic binder systems, including pattern molds and core boxes.

Consequently, by so proceeding with an admixture of foundry sand and a binding amount of the phenolic resole resin, including resorcinol components in the ester-curative, there is formed a foundry core or mold comprising foundry sand and a binding amount of a binder composition comprising the reaction product of the phenolic resole resin, the resorcinol component, and the ester-curative. Ester-curatives combined with resorcinol as recited herein are referred to as modified ester-curatives.

As further described herein, ALpHASET 9040 was tested in conjunction with various resorcinol modified esters. The formaldehyde measurements were made in each instance using EPA method 316. Sand tests were also performed to show any effect on tensile strength. Unless otherwise indicated, all test samples of the present invention to be analyzed for formaldehyde emission were prepared using the following process.

### Formaldehyde Collection and Analysis

All samples were prepared using a Hobart Kitchen Aid Mixer. 3000g of the 55 GFN sand was weighed in a mixing bowl. 1.5% (45 grams) by weight based on sand (BOS) of ALpHASET 9040 was weighed, added to the sand, and mixed for 60 seconds. 25% (11.25 grams) of modified ester-curative by weight based on binder (BOB) was added to the coated sand and mixed for an additional 40 seconds. At the end of mixing, the coated sand sample was immediately placed in a test box and tamped down. The test box was then closed with a lid and formaldehyde was drawn into samples from the box for 20 minutes. The samples were then analyzed by an outside lab for formaldehyde using the analytical procedures of EPA Method 316.

### Tensile Strength Test

Unless otherwise indicated, all foundry cores of the present invention to be analyzed for tensile strength were prepared using the following process. HA International's standard sand tensile strength test procedure was used. 3000g of the 55 GFN sand was weighed in a mixing bowl. 1.5% (45 grams) by weight BOS of ALpHASET 9040 was added to the sand and mixed for 60 seconds. 25% of modified ester-curative (11.25 grams) by weight BOB was added to the coated sand and mixed for a further 40 seconds. The mixed sand was packed into a Dietert 696 core box, which is standard tooling for making cores. Part of the mixed sand was lightly packed into a cup, and a tongue depressor was placed in the top of the mixed sand to check for strip time. When the tongue depressor was hard to push down, it was near strip time. Once 15-18 pounds per square inch (psi) of mold surface strength when subjected to the force of a spring loaded penetrometer was achieved, the cores were removed from the core box. (The length of time between the mixing of all core components, i.e., after addition of the ester-curative, and achievement of the aforementioned core surface strength sufficient to allow the cores to be removed from the core box is the strip time.) The strip time was recorded and the test cores were broken at various time intervals after the cores was made. The cores were stored in an open laboratory environment, at ambient temperatures, until tested. Tensile strength measurements were made as described below. Average values for 3 to 4 tensile strength measurements were recorded.

Tensile strengths of the cores prepared as noted above were determined using a Thwing-Albert Tensile Tester (Philadelphia, Pa.). This device consists of jaws that accommodate the ends of a "dog-bone-shaped" test core. A load is then applied to each end of the test core as the jaws are moved away from each other. The application of an increasing load continues until the test core breaks. The load at this point is termed the tensile strength, and it has units of psi.

### EXAMPLES

### Example 1: Effect of Adding Resorcinol to ALpHACURE 920 in an Ester-Cured Alkaline Phenolic No-Bake Binder Composition

In this example, 1%, 3%, and 5% (by weight) of resorcinol was dissolved in 99%, 97%, and 95% (by weight) of ALpHACURE 920, respectively. Samples and cores were made, as described above. The formaldehyde emissions measurements were made using EPA Method 316 and the results of the measurements are provided in Table 1A below.

**Table 1A**

| **Reduction of Formaldehyde Emission in Ester-Cured Alkaline Phenolic No-Bake Binder Composition Combining ALpHACURE 920 and Resorcinol** | | | |
|---|---|---|---|
| Sample Number | Modified Ester-Curative Composition, wt% | Formaldehyde Emitted, ppm | Reduction, % |
| Control Sample | 100% ALpHACURE 920 | 1.302 | n/a |
| Test Sample 1 | 99% ALpHACURE 920 + 1% Resorcinol | 0.945 | 27.4 |
| Test Sample 2 | 97% ALpHACURE 920 + 3% Resorcinol | 0.603 | 53.7 |
| Test Sample 3 | 95% ALpHACURE 920 + 5% Resorcinol | 0.298 | 77.1 |

As the results of Table 1A illustrate, the use of the modified ester-curative composition of the present invention in ester-cured alkaline phenolic no-bake binder systems results in unexpected and compelling reductions in formaldehyde emissions from the systems, namely foundry molds and cores.

Additionally, the tensile strength of cores formed under Example 1 were tested using a Thwing-Albert Tensile Tester, as described above. The results of the tests are provided in Table 1B below.

**Table 1B**

| **Sustained Tensile Strength of Ester-Cured Alkaline Phenolic No-Bake Binder Composition Having Reduced of Formaldehyde Emission and Combining ALpHACURE 920 and Resorcinol** | | | | | |
|---|---|---|---|---|---|
| Core Number | Modified Ester-Curative Composition, wt% | "Intermediate" Strip Time, minutes | Tensile Strength at 1 Hour, psi | Tensile Strength at 2 Hours, psi | Tensile Strength at 24 Hours, psi |
| Control Core | 100% ALpHACURE 920 | 16.5 | 67 | 74 | 139 |
| Test Core 1 | 99% ALpHACURE 920 + 1% Resorcinol | 17.6 | 62 | 82 | 122 |
| Test Core 2 | 97% ALpHACURE 920 + 3% Resorcinol | 18.8 | 61 | 85 | 134 |
| Test Core 3 | 95% ALpHACURE 920 + 5% Resorcinol | 19.3 | 62 | 83 | 145 |

As the results of Table 1B illustrate, the use of the modified ester-curative composition of the present invention in ester-cured alkaline phenolic no-bake binder systems has a limited effect on intermediate strip times and no significant effect on tensile strength of the systems, including foundry molds and cores.

### Comparative example 2: Effect of Adding Resorcinol to ALpHACURE 955N in an Ester-Cured Alkaline Phenolic No-Bake Binder Composition

In this comparative example, 5% (by weight) of resorcinol was dissolved in 95% (by weight) of ALpHACURE 955N. Samples and cores were made, as described above. The formaldehyde emissions measurements were made using EPA Method 316 and the results of the measurements are provided in Table 2A below.

**Table 2A**

| **Reduction of Formaldehyde Emission in Ester-Cured Alkaline Phenolic No-Bake Binder Composition Combining ALpHACURE 955N and Resorcinol** | | | |
|---|---|---|---|
| Sample Number | Modified Ester-Curative Composition, wt% | Formaldehyde Emitted, ppm | Reduction, % |
| Control Sample | 100% ALpHACURE 955N | 0.527 | n/a |
| Test Sample 1 | 95% ALpHACURE 955N + 5% Resorcinol | 0.055 | 89.6 |

As the results of Table 2A illustrate, the use of the modified ester-curative composition of the present invention in ester-cured alkaline phenolic no-bake binder systems results in unexpected and compelling reductions in formaldehyde emissions from the systems, including the foundry molds and cores.

Additionally, the tensile strength of cores formed under comparative example 2 were tested using a Thwing-Albert Tensile Tester, as described above. The results of the tests are provided in Table 2B below.

**Table 2B**

| **Sustained Tensile Strength of Ester-Cured Alkaline Phenolic No-Bake Binder Composition Having Reduced of Formaldehyde Emission and Combining ALpHACURE 955N and Resorcinol** | | | | | |
|---|---|---|---|---|---|
| Core Number | Modified Ester-Curative Composition, wt% | "Slow" Strip Time, minutes | Tensile Strength at 2 Hours, psi | Tensile Strength at 4 Hours, psi | Tensile Strength at 72 Hours, psi |
| Control Core | 100% ALpHACURE 955N | 66 | 40 | 70 | 105 |
| Test Core 1 | 95% ALpHACURE 955N + 5% Resorcinol | 75.5 | 49 | 77 | 128 |

As the results of Table 2B illustrate, the use of the modified ester-curative composition of the present invention in ester-cured alkaline phenolic no-bake binder systems has a limited effect on slow strip times and no significant effect on tensile strength of the systems, including the foundry molds and cores.

Comparative example 3: Effect of Adding Resorcinol to an ester blend comprised of gamma butyrolactone and propylene carbonate in an Ester-Cured Alkaline Phenolic No-Bake Binder Composition

In this comparative example, 5% (by weight) of resorcinol was dissolved in 95% (by weight) of an ester blend comprised of 70% (by weight) of gamma butyrolactone and 30% (by weight) of propylene carbonate. Samples and cores were made, as described above. The formaldehyde emissions measurements were made using EPA Method 316 and the results of the measurements are provided in Table 3A below.

**Table 3A**

| **Reduction of Formaldehyde Emission in Ester-Cured Alkaline Phenolic No-Bake Binder Composition Combining Blended Ester and Resorcinol** | | | |
|---|---|---|---|
| Sample Number | Modified Ester-Curative Composition, wt% | Formaldehyde Emitted, ppm | Reduction, % |
| Control Sample | 70% gamma butyrolactone and 30% propylene carbonate | 4.149 | n/a |
| Test Sample 1 | 95% of (70% gamma butyrolactone + 30% propylene carbonate) + 5% Resorcinol | 2.127 | 48.7 |

As the results of Table 3A illustrate, the use of the modified ester-curative composition of the present invention in ester-cured alkaline phenolic no-bake binder systems results in unexpected and compelling reductions in formaldehyde emissions from the systems, including the foundry molds and cores.

Additionally, the tensile strength of the cores formed under comparative example 3 were tested using a Thwing-Albert Tensile Tester, as described above. The results of the tests are provided in Table 3B below.

**Table 3B**

| **Sustained Tensile Strength of Ester-Cured Alkaline Phenolic No-Bake Binder Composition Having Reduced of Formaldehyde Emission and Combining Blended Ester and Resorcinol** | | | | |
|---|---|---|---|---|
| Core Number | Modified Ester-Curative Composition, wt% | "Fast" Strip Time, minutes | Tensile Strength at 1 Hour, psi | Tensile Strength at 2 Hours, psi |
| Control Core | 70% gamma butyrolactone and 30% propylene carbonate | 2.5 | 63 | 66 |
| Test Core 1 | 95% of (70% gamma butyrolactone + 30% propylene carbonate) + 5% Resorcinol | 2.8 | 69 | 79 |

As the results of Table 3B illustrate, the use of the modified ester-curative composition of the present invention in ester-cured alkaline phenolic no-bake binder systems has a limited effect on fast strip times and no significant effect on tensile strength of the systems, including the foundry molds and cores.

## Claims

1. A method for reducing formaldehyde emissions from ester-cured foundry binders used in the formation of foundry molds and cores, the method comprising the steps of:
(a) combining an aggregate with a alkaline phenolic resole resin to form a first admixture;
(b) combining an ester-curative with resorcinol to form a modified ester-curative; and
(c) combining the first admixture with the modified ester-curative to form a second admixture;
wherein the modified ester-curative is configured to effect a reduced emission of formaldehyde from the second admixture; wherein the ester-curative is comprised of 90% to 100% glycerol triacetate by weight of the ester-curative; and wherein the ratio of the ester-curative and the resorcinol ranges from 19:1 to 99:1 by weight of the modified ester-curative.

2. The method of claim 1, wherein the alkaline phenolic resole resin comprises 5% to 10% sodium hydroxide by weight of the resin.

3. The method of claim 1, wherein the alkaline phenolic resole resin has a pH of 13 or greater.

4. The method of claim 1, wherein the ratio of ester-curative to resorcinol is 32:1.

5. The method of claim 1, wherein the ratio of ester-curative to resorcinol is 19:1.

6. The method of claim 1, further comprising the steps of:
(d) placing the second admixture into a housing; and
(e) allowing the second admixture to cure;
wherein the alkaline phenolic resole resin has a pH of 13 or greater.

7. The method of claim 1, wherein the alkaline phenolic resole resin comprises 5% to 10% sodium hydroxide by weight of the resin, and the alkaline phenolic resole resin has a pH of 13 or greater.

## Patentansprüche

1. Ein Verfahren zum Verringern von Formaldehydemissionen aus estergehärteten Gießereibindemitteln, die bei der Herstellung von Gießereiformen und -kernen verwendet werden, wobei das Verfahren die folgenden Schritte umfasst:
(a) das Vermischen eines Zuschlagstoffs mit einem alkalischen Phenol-Resol-Harz zur Bildung einer ersten Mischung;
(b) das Vermischen eines Ester-Härtungsmittels mit Resorcin zur Bildung eines modifizierten Ester-Härtungsmittels; und
(c) das Vermischen der ersten Mischung mit dem modifizierten Ester-Härtungsmittel zur Bildung einer zweiten Mischung;
wobei das modifizierte Ester-Härtungsmittel so ausgestaltet ist, dass es eine verringerte Emission von Formaldehyd aus der zweiten Mischung bewirkt; wobei das Ester-Härtungsmittel 90 Gew.-% bis 100 Gew.-% Glycerintriacetat, bezogen auf das Gewicht des Ester-Härtungsmittels, umfasst; wobei das Verhältnis des Ester-Härtungsmittels zu dem Resorcin von 19:1 bis 99:1, bezogen auf das Gewicht des modifizierten Ester-Härtungsmittels, beträgt.

2. Ein Verfahren nach Anspruch 1, wobei das alkalische Phenol-Resol-Harz 5 Gew.-% bis 10 Gew.-% Natriumhydroxid, bezogen auf das Gewicht des Harzes, umfasst.

3. Ein Verfahren nach Anspruch 1, wobei das alkalische Phenol-Resol-Harz einen pH-Wert von 13 oder höher aufweist.

4. Ein Verfahren nach Anspruch 1, wobei das Verhältnis des Ester-Härtungsmittels zu dem Resorcin 32:1 beträgt.

5. Ein Verfahren nach Anspruch 1, wobei das Verhältnis des Ester-Härtungsmittels zu dem Resorcin 19:1 beträgt.

6. Ein Verfahren nach Anspruch 1, ferner umfassend die Schritte:
(d) das Einbringen der zweiten Mischung in ein Gehäuse; und
(e) das Aushärtenlassen der zweiten Mischung;
wobei das alkalische Phenol-Resol-Harz einen pH-Wert von 13 oder höher aufweist.

7. Das Verfahren nach Anspruch 1, wobei das alkalische Phenol-Resol-Harz 5 Gew.-% bis 10 Gew.-% Natriumhydroxid, bezogen auf das Gewicht des Harzes, umfasst und das alkalische Phenol-Resol-Harz einen pH-Wert von 13 oder höher aufweist.

## Revendications

1. Procédé pour réduire les émissions de formaldéhyde provenant de liants de fonderie durcis par esters utilisés dans la formation de moules et de noyaux de fonderie, le procédé comprenant les étapes consistant à :
(a) combiner un granulat avec une résine résol phénolique alcaline pour former un premier mélange ;
(b) combiner un durcisseur ester avec du résorcinol pour former un durcisseur ester modifié ; et
(c) combiner le premier mélange avec le durcisseur ester modifié pour former un deuxième mélange ;
dans lequel le durcisseur ester modifié est configuré pour réduire les émissions de formaldéhyde provenant du deuxième mélange ; dans lequel le durcisseur ester est composé de 90 % à 100 % de triacétate de glycérol en poids du durcisseur ester ; et dans lequel le rapport entre le durcisseur ester et le résorcinol est dans la plage allant de 19:1 à 99:1 en poids du durcisseur ester modifié.

2. Procédé selon la revendication 1, dans lequel la résine résol phénolique alcaline comprend 5 % à 10 % d'hydroxyde de sodium en poids de la résine.

3. Procédé selon la revendication 1, dans lequel la résine résol phénolique alcaline a un pH de 13 ou plus.

4. Procédé selon la revendication 1, dans lequel le rapport entre le durcisseur ester et le résorcinol est de 32:1.

5. Procédé selon la revendication 1, dans lequel le rapport entre le durcisseur ester et le résorcinol est de 19:1.

6. Procédé selon la revendication 1, comprenant en outre les étapes consistant à :
(d) placer le deuxième mélange dans un boîtier ; et
(e) laisser le deuxième mélange durcir ;
dans lequel la résine résol phénolique alcaline a un pH de 13 ou plus.

7. Procédé selon la revendication 1, dans lequel la résine résol phénolique alcaline comprend 5 % à 10 % d'hydroxyde de sodium en poids de la résine, et la résine résol phénolique alcaline a un pH de 13 ou plus.
